# EUROPEAN PATENT APPLICATION

(11) **EP 3 964 614 A1**
(43) Date of publication of application: **09.03.2022**
(21) Application number: 21190033.7
(22) Date of filing: 06.08.2021
(51) Int. Cl.: D04B 1/00, B32B 5/02, B32B 3/26, B32B 5/14

(54) **GARMENT AND MANUFACTURING METHOD**

(30) Priority: 04.09.2020 IT 202000021016
(71) Applicant: Alberto Zambelli S.r.l., 25019 Sirmione (BS) (IT)
(72) Inventor: ZAMBELLI, Alberto, I-25019 Sirmione, BRESCIA (IT); PAROLINI, Roberto, I-25019 Sirmione, BRESCIA (IT)
(74) Representative: Pulieri, Gianluca Antonio

(57) **Abstract**

A garment (100), such as a jacket, a blazer, a coat, or trousers, comprises a plurality of portions (102-112), wherein each portion (102-112) consists of at least one multilayer assembly (1-5). The multilayer assembly (1-5) consists of an outer layer (la-5a), consisting of a fabric fully fashioned or with selvedge and/or cut-and-sew or run-proof fabric obtained by means of a straight loom, and an inner layer (lb-5b), wherein for a portion (102-112), the fabric forming the outer layer (la-5a) has a first predetermined density of knit stitches, which is different from that of the fabric forming the outer layer (1a-5a) of a further portion (102-112).

## Description

The present invention relates to a multilayer material that may be used in a variety of industries, such as fashion, furniture, or automotive. For example, in the fashion industry, the multilayer material may be used to make a garment or accessories such as bags, shoes, hats, gloves.

Examples of multilayer materials are described in WO-A1-2018/161152 and WO-A1-2020/121176, which are specific to the medical sector having requirements very different from those of the sector of the present invention. In particular, the materials disclosed therein do not meet the requirements for breathability and are not made by means of a straight loom, as is the case with the material according to the present invention.

For reasons of clarity, hereinafter, explicit reference will be made to a garment. In particular, the present invention relates to a garment and a method for manufacturing the garment.

In this sector, a large part of the research and development efforts of manufacturing companies are directed toward the creation of comfortable clothing, as well as clothing that responds to current tastes and trends.

In particular, the user feels a strong need to have a garment, such as a jacket, a blazer, or trousers, that is wearable for everyday activities, both for leisure and for work (we usually talk about "urban style" or "city functional apparel") and is able to ensure a high thermal comfort in terms of bodily microclimate, even in light of the sudden climate changes we are witnessing today.

The object of the present invention is to meet this requirement.

Said object is achieved by a garment according to claim 1 and a method for manufacturing a garment according to claims 10 and 11.

The features and advantages of the garment and the related method will be apparent from the description provided below, given by way of non-limiting example according to the figures in the attached drawings, wherein:

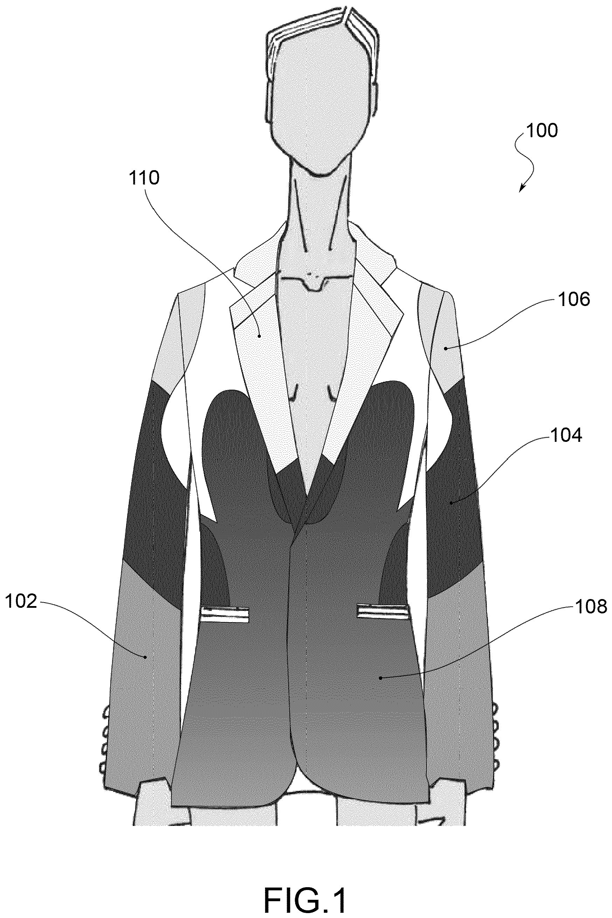

- Fig. 1 shows a worn garment from the front, on which are identified, in gray scale, zones with different density of knit stitches;

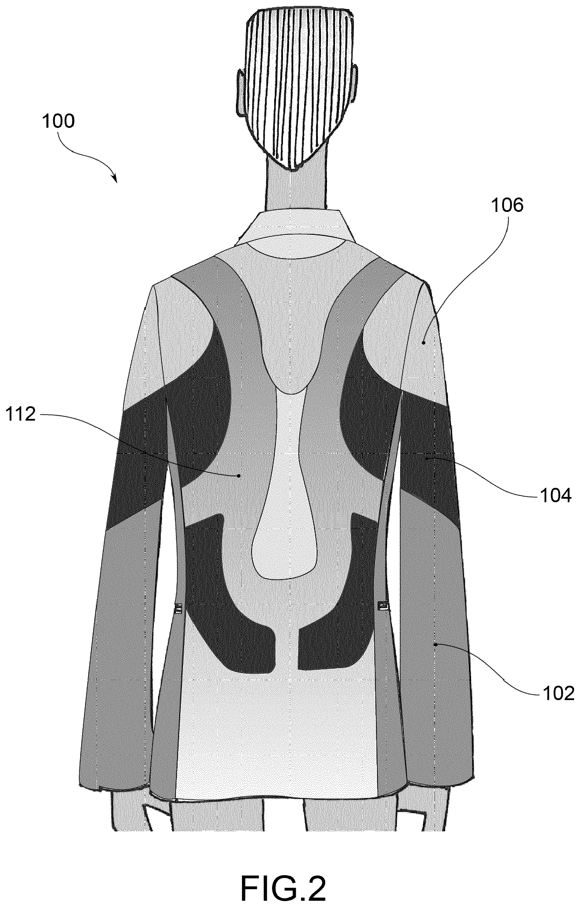

- Fig. 2 depicts from the rear the garment in Fig. 1;

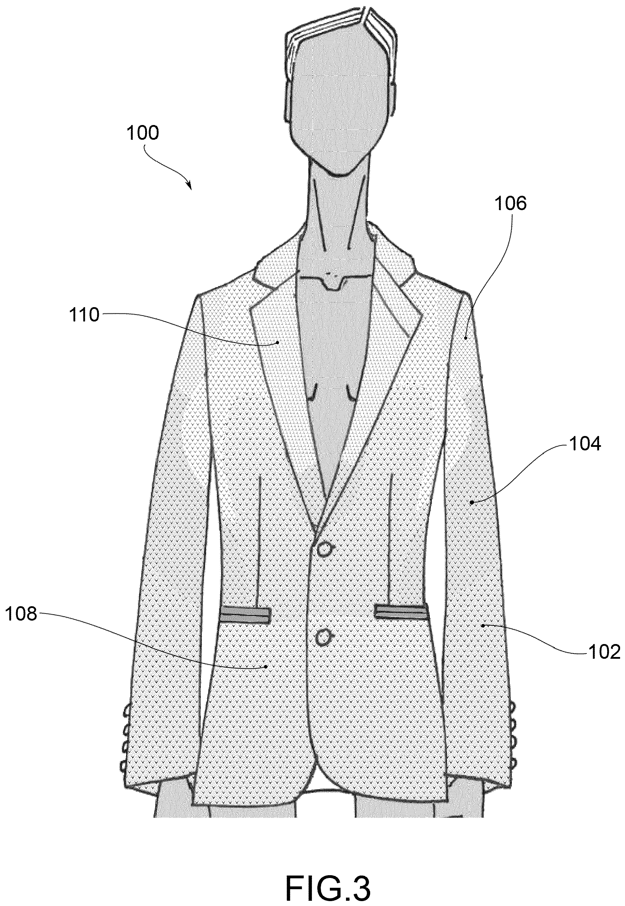

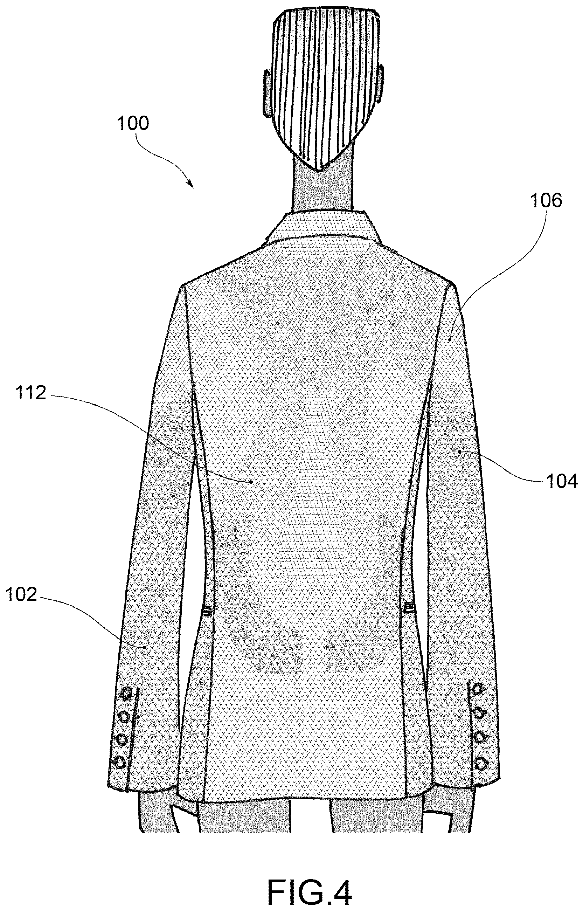

- Fig. 3 and 4 correspond to Fig. 1 and 2, but the different density of the knit stitches is rendered with more or less dense dots;

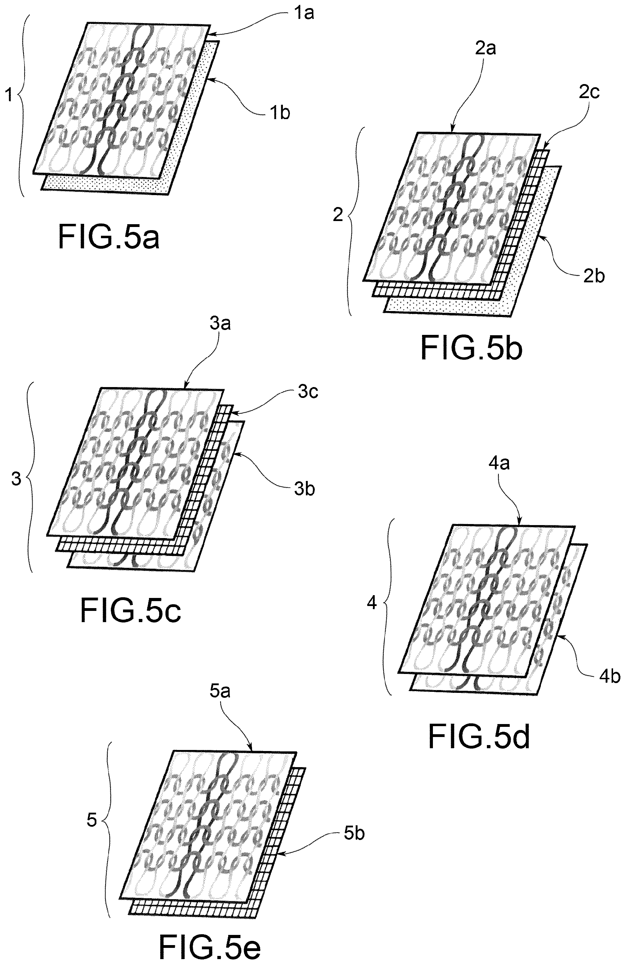

- Fig. 5a through 5e depict variant embodiments of a multilayer assembly for a garment according to the present invention;
- Fig. 6a and 6b illustrate examples of straight looms for manufacturing a fabric of the multilayer assembly according to the present invention.

In the following description, for reasons of clarity, explicit reference will be made to a particular garment, i.e., a jacket or blazer; it is understood that the invention is in fact applicable to any other garment, for example, a coat or trousers.

With reference to the figures of the attached drawings, 100 denotes collectively a garment consisting of a jacket or blazer, the different portions of which are made of a multilayer assembly comprising a plurality of overlapping layers. Said portions will be discussed hereinafter.

According to a first embodiment, a multilayer assembly 1 comprises an outer layer 1a, consisting of a fabric, and an inner layer 1b consisting of a jersey, i.e., a light or spongy fabric, as required, applied directly to the outer layer 1a. Said assembly may be used, for example, for making a garment for mild climates or for making trousers.

According to a further embodiment, a multilayer assembly 2 comprises an outer layer 2a, consisting of a fabric, an inner layer 2b, consisting of a jersey, and an intermediate layer 2c, located between and attached to the outer layer 2a and the inner layer 2b, consisting of a breathable membrane. This assembly may be used, for example, for the manufacture of a garment for cold climates or for the manufacture of a jacket.

According to a still further embodiment, a multilayer assembly 3 comprises an outer layer 3a, consisting of a fabric, an inner layer 3b, consisting of a further fabric or knitted fabric, and an intermediate layer 3c, located between and attached to the outer layer 3a and the inner layer 3b, consisting of a breathable membrane. Such an assembly may be used, for example, to make a garment for very cold climates.

According to one embodiment, a multilayer assembly 4 comprises an outer layer 4a, consisting of a fabric, and an inner layer 4b, consisting of a fabric or additional knitted fabric, applied to the outer layer 4a. Said assembly may be used, for example, to make winter trousers.

According to a further embodiment, a multilayer assembly 5 comprises an outer layer 5a, consisting of a fabric, and an inner layer 5b, consisting of a breathable membrane, applied to the outer layer 4a. In said embodiment, the inner layer 5b has an outer face, facing the outer layer 5a, and an opposite inner face; a lining is preferably applied to the inner face, or the inner face is printed, to be put in contact with the skin. Said assembly may be used, for example, to make a waterproof, windproof and rainproof garment, such as a trench coat.

Said fabric shall be either fully fashioned or with a selvage and/or a cut-and-sew fabric or a run-proof fabric.

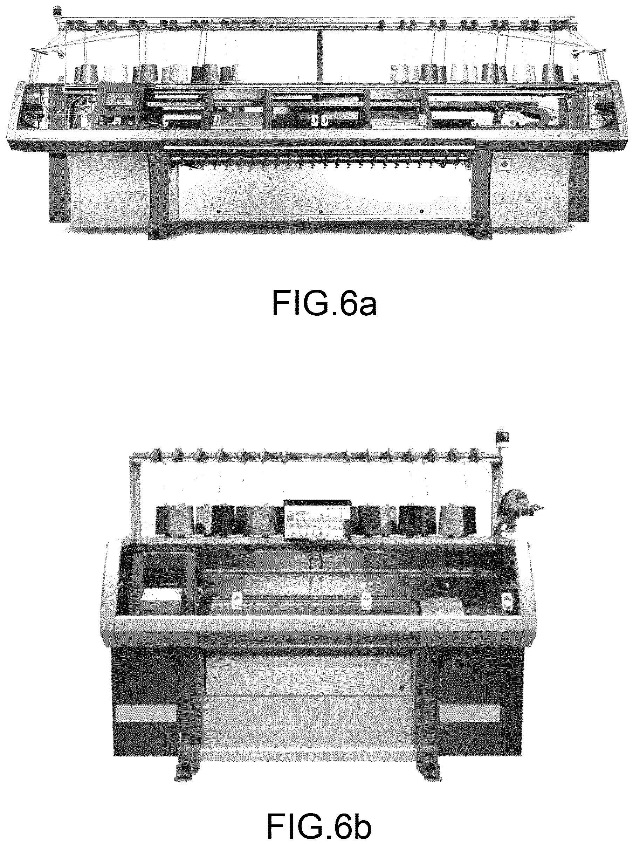

Said fabric is obtained by processing on a straight loom. Fig. 6a and 6b show examples of straight looms that may be used to make fabric, such as a Jacquard knitting loom, an inlay knitting loom, a warp knitting loom, a single-face loom, or a double-face loom.

The breathable membrane is a microperforated membrane, for example made of natural polyamide.

One layer is applied to another, for example, by means of a layer of adhesive, preferably natural, or by a plurality of bonding points, for example formed of polyurethane.

The fabric features a density of knit stitches.

According to the invention, the garment 100 comprises a plurality of portions 102-112; for example, the blazer comprises a first portion 102 corresponding to the end portion of a sleeve, a second portion 104 corresponding to the middle portion of the sleeve, a third portion 106 corresponding to the beginning portion of the sleeve, a fourth portion 108 corresponding to the front, a fifth portion 110 corresponding to a portion of the neck, a sixth portion 112 corresponding to a portion of the back, and so on.

For a portion 102-112, the fabric comprising the outer layer 2a-5a of one of said multilayer assemblies 1-5 has a predetermined stitch density, which is different from that of the fabric comprising the outer layer 2a-5a of a further portion 102-112.

In other words, the knit stitches of the fabric have a differential density on the garment so as to maximize comfort for the user, creating zones that are more or less warm or more or less breathable, depending on the parts of the body on which these zones are placed and the use of the garment.

The fabric with differential stitch density is achieved by properly configuring the straight loom, e.g., through appropriate programming of the loom management software.

According to the invention, moreover, a method for manufacturing a garment 100 comprises the following steps:
1) identifying a plurality of portions 102-112 of the garment 100;
2) configuring a straight loom for manufacturing a fabric fully fashioned or with a selvage or a cut-and-sew fabric or a run-proof fabric having a plurality of areas, wherein one area has a density of knit stitches which is different from the one of a further area;
3) manufacturing said fabric;
4) for each portion 102-112, manufacturing at least one multilayer assembly 1-5 comprising an outer layer 1a-5a, at least partially consisting of said fabric, and an inner layer 2b-5b;
5) manufacturing the garment 100 by joining said portions 102-112.

According to a further aspect of the invention, a method for manufacturing a garment 100 comprises the following steps:
1) identifying a plurality of portions 102-112 of the garment 100;
2) for each portion, configuring a straight loom for manufacturing a fabric fully fashioned or with a selvage or a cut-and-sew fabric or a run-proof fabric having a predefined density of knit stitches which is different from the one of a further portion;
3) manufacturing said fabric;
4) for each portion 102-112, manufacturing at least one multilayer assembly 1-5 comprising an outer layer 1a-5a, at least partially consisting of said fabric, and an inner layer 2b-5b;
5) manufacturing the garment 100 by joining said portions 102-112.

Moreover, according to one aspect of the invention, designs or patterns are manufactured on the fabric according to an inlay processing or according to a Jacquard processing.

Innovatively, the garment described above, for which the fabric is manufactured by means of a straight loom, meets the needs of the industry, as it has a high thermal comfort, obtained through the distribution on the body of areas with different density of stitches and different structure.

The invention, in addition to the manufacture of a garment, is aimed at:
A) a clothing accessory or parts thereof, such as a bag (specifically, the pouch), a shoe (specifically, the upper), a hat, a glove, and the related method for manufacturing a clothing accessory, having the steps described above;
B) a covering for a furnishing element such as a sofa, a chair, a lamp, and the related method of manufacturing a covering for a furnishing element, having the steps described above;
C) a covering for a seat of a vehicle and the related method for manufacturing a covering for a seat of a vehicle, having the steps described above.

It is clear that a person skilled in the art, in order to satisfy current needs, could make modifications to the garment described above, said modifications all being contained within the scope of protection as defined in the following claims.

## Claims

1. A garment (100), such as a jacket, a blazer, a coat or trousers, comprising a plurality of portions (102-112), wherein each portion (102-112) consists of at least one multilayer assembly (1-5), wherein said multilayer assembly (1-5) consists of an outer layer (1a-5a), consisting of a fabric fully fashioned or with a selvage and/or a cut-and-sew fabric or a run-proof fabric, obtained by means of a straight loom, and of an inner layer (1b-5b), wherein, for a portion (102-112), the fabric forming the outer layer (1a-5a) has a first predefined density of knit stitches, different from that of the fabric forming the outer layer (1a-5a) of a further portion (102-112),
wherein the multilayer assembly (2) comprises an intermediate layer (2c), placed between the respective outer layer (2a) and the respective inner layer (2b) and applied thereto, said intermediate layer (2c) being comprised of a breathable membrane.

2. A garment according to claim 1, wherein the inner layer (1b) consists of a jersey.

3. A garment according to claim 1, wherein the inner layer (3b) consists of a further fabric fully fashioned, with a selvage and/or a run-proof fabric.

4. A garment according to claim 1, wherein the inner layer (5b) has an outer face, facing the outer layer (5a), and an opposite inner face, and a lining is applied on the inner face, or the inner face is printed, to be put in contact with the skin.

5. A garment according to any of the preceding claims, wherein the breathable membrane is a micro-perforated membrane, for example made of natural polyamide.

6. A garment according to any of the preceding claims, wherein the application of one layer to another one is obtained by means of an adhesive layer or by means of a plurality of bonding points, for example made of polyurethane.

7. A method for manufacturing a garment (100) comprising the following steps:
1) identifying a plurality of portions (102-112) of the garment (100);
2) configuring a straight loom for manufacturing a fabric fully fashioned or with a selvage or a cut-and-sew fabric or a run-proof fabric having a plurality of areas, wherein one area has a density of knit stitches which is different from the one of another area;
3) manufacturing said fabric by means of the straight loom;
4) for each portion (102-112), manufacturing at least one multilayer assembly (1-5) comprising an outer layer (1a-5a), at least partially consisting of said fabric, an inner layer (2b-5b) and an intermediate layer (2c), placed between the respective outer layer (2a) and the respective inner layer (2b) and applied thereto, said intermediate layer (2c) being formed of a breathable membrane;
5) manufacturing the garment (100) by joining said portions (102-112).

8. A method for manufacturing a garment (100) comprising the following steps:
1) identifying a plurality of portions (102-112) of the garment (100);
2) for each portion (102-112), configuring a straight loom for manufacturing a fabric fully fashioned or with a selvage or a cut-and-sew fabric or a run-proof fabric having a predefined density of knit stitches which is different from the one of a further portion;
3) manufacturing said fabric by means of the straight loom;
4) for each portion (102-112), manufacturing at least one multilayer assembly (1-5) comprising an outer layer (1a-5a), at least partially consisting of said fabric, and an inner layer (2b-5b) and an intermediate layer (2c), placed between the respective outer layer (2a) and the respective inner layer (2b) and applied thereto, said intermediate layer (2c) being formed of a breathable membrane;
5) manufacturing the garment (100) by joining said portions (102-112).

9. A method for manufacturing a garment according to claim 7 or 8, wherein designs or patterns are made on the fabric according to an inlay processing or according to a Jacquard processing.

10. A garment (100), such as a jacket, a blazer, a coat, or trousers, comprising a plurality of portions (102-112), wherein each portion (102-112) consists of at least one multilayer assembly (1-5), wherein said multilayer assembly (1-5) consists of an outer layer (1a-5a), consisting of a fabric that is fully fashioned or with a selvage or a cut-and-sew fabric or a run-proof fabric, obtained by means of a straight loom, and an inner layer (1b-5b), wherein for a portion (102-112), the fabric that forms the outer layer (1a-5a) has a first predetermined density of knit stitches, which is different from that of the fabric that forms the outer layer (1a-5a) for a further portion (102-112),
wherein the inner layer (5b) consists of a breathable membrane and is applied to the outer layer (4a).

11. A clothing accessory or part of a clothing accessory, such as a bag (pouch), a shoe (shoe upper), a hat, a glove, comprising a plurality of portions (102-112), wherein each portion (102-112) consists of at least one multilayer assembly (1-5), wherein said multilayer assembly (1-5) consists of an outer layer (1a-5a), consisting of a fabric fully fashioned or with a selvage or a cut-and-sew fabric or a run-proof fabric, obtained by means of a straight loom, and of an inner layer (1b-5b), wherein, for a portion (102-112), the fabric forming the outer layer (1a-5a) has a first predefined density of knit stitches, different from that of the fabric forming the outer layer (1a-5a) of a further portion (102-112).

12. A method for manufacturing a clothing accessory, according to the steps of claim 7 or 8 or 9.

13. A covering for a furnishing element such as a sofa, a chair, a lamp, comprising a plurality of portions (102-112), wherein each portion (102-112) consists of at least one multilayer assembly (1-5), wherein said multilayer assembly (1-5) consists of an outer layer (1a-5a), consisting of a fabric fully fashioned or with a selvage or a cut-and-sew fabric or a run-proof fabric, and of an inner layer (1b-5b), wherein, for a portion (102-112), the fabric forming the outer layer (1a-5a) has a first predefined density of knit stitches, different from that of the fabric forming the outer layer (1a-5a) of a further portion (102-112).

14. A method for manufacturing a covering for a furnishing element, according to the steps of claim 7 or 8 or 9.

15. A covering for a seat of a vehicle, comprising a plurality of portions (102-112), wherein each portion (102-112) consists of at least one multilayer assembly (1-5), wherein said multilayer assembly (1-5) consists of an outer layer (1a-5a), consisting of a fabric fully fashioned or with a selvage or a cut and sew fabric or a run-proof fabric, and of an inner layer (1b-5b), wherein, for a portion (102-112), the fabric forming the outer layer (1a-5a) has a first predefined density of knit stitches, different from that of the fabric forming the outer layer (1a-5a) of a further portion (102-112).

16. A method for manufacturing a covering for a seat of a vehicle, according to the steps of claim 7 or 8 or 9.
